# FASCICULE DE BREVET EUROPEEN

(11) **EP 0 691 902 B1**
(45) Date de publication et mention de la délivrance du brevet: **04.01.2006**
(21) Numéro de dépôt: 95908288.4
(22) Date de dépôt: 31.01.1995
(51) Int. Cl.: B29C 70/48

(54) **PROCEDE DE FABRICATION DE PIECES RENFORCEES EN MATIERE THERMOPLASTIQUE ET PIECES OBTENUES PAR CE PROCEDE**
VERFAHREN ZUM HERSTELLEN VON VERSTÄRKTEN GEGENSTÄNDEN AUS THERMOPLASTISCHEM MATERIAL UND NACH DIESEM VERFAHREN HERGESTELLTE GEGENSTÄNDE
METHOD FOR THE PRODUCTION OF THERMOPLASTIC REINFORCED PARTS AND PARTS SO OBTAINED

(30) Priorité: 31.01.1994 FR 9401005
(43) Date de publication de la demande: 17.01.1996
(73) Titulaire: COMPAGNIE PLASTIC OMNIUM, 69007 Lyon (FR)
(72) Inventeur: UYTTERHAEGHE, Luc, F-01100 Oyonnax (FR); GILLE, Denis, F-01810 Bellignat (FR)
(74) Mandataire: Remy, Vincent Noel Paul
(86) Numéro de dépôt international: PCT/FR1995/000105
(87) Numéro de publication internationale: WO 1995/020480

(56) Documents cités:
- EP-A- 0 138 294
- EP-A- 0 333 198
- EP-A- 0 405 588
- EP-A- 0 423 676
- FR-A- 1 528 176
- FR-A- 2 628 448
- GB-A- 2 070 504
- US-A- 2 495 640
- US-A- 2 975 503
- PATENT ABSTRACTS OF JAPAN vol. 14, no. 540 (M-1053) 29 Novembre 1990 & JP,A,02 229 014 (SUMITOMO CHEM. CO.) 11 Septembre 1990

## Description

La présente invention a pour objet un nouveau procédé pour réaliser des pièces renforcées en matière plastique ainsi que les pièces obtenues par ce procédé.

On sait que le procédé d'injection utilisé couramment pour réaliser des pièces en matière thermoplastique consiste à injecter sous très forte pression la matière plastique à l'état pâteux dans un moule dont la forme correspond à la forme de la pièce qui doit être fabriquée, a refroidir la matière plastique ainsi moulée et a ouvrir le moule pour obtenir la pièce fabriquée.

On connaît également un procédé pour munir au moins une face de la pièce en matière plastique ainsi fabriquée d'un revêtement tel qu'un tissu, un tricot ou un mat, qui consiste à disposer une telle feuille dans le moule avant l'injection de la matière plastique.

De tels revêtements peuvent avoir pour but de modifier l'apparence de la pièce ainsi fabriquée et/ou de renforcer cette pièce lorsque par exemple le revêtement contient des fibres en un matériau particulièrement résistant.

Un tel procédé présente l'inconvénient que l'injection de la matière plastique a tendance a déplacer la feuille en lui donnant des plis ou des ondulations qui rendent inacceptable la pièce ainsi obtenue.

Une solution connue par exemple de EP-A0333198 pour éviter cet inconvénient consiste a pincer les bords de la feuille dans le plan de joint du moule, ce qui évite dans une certaine mesure l'inconvénient précité mais qui présente l'inconvénient que la feuille dépasse hors de l'objet au niveau du plan de joint et que dans le cas de formes compliquées, la capacité de déformation de la feuille s'en trouve limitée.

Une autre solution connue consiste à préformer la feuille pour qu'elle s'adapte sensiblement à la forme du moule ce qui limite le risque de déformations intempestives de la feuille. Cependant, cette solution est plus coûteuse à mettre en oeuvre.

On connaît également un procédé de fabrication de pièces en matière plastique généralement désigné sous le nom d'extrusion-compression ou d'injection-compression qui consiste à utiliser un moule a plan de joint positif, a séparer les deux parties du moule en disposant le plan de joint en général de manière sensiblement horizontale, a déposer une masse de matière thermoplastique a l'état pâteux sur la partie inférieure du moule, puis a refermer le moule en exerçant une compression de manière à obtenir une répartition régulière de la matière thenaoplastique à l'intérieur du moule.

Ce procédé est désigné sous le nom d'extrusion-compression lorsque la masse de matière plastique est déposée à l'aide d'une tête d'extrusion alors qu'on le désigne sous le nom d'injection-compression lorsque cette masse est déposée par une tête d'injection.

Ce procédé d'extrusion-compression ou d'injection-compression a déjà été utilisé pour surmouler des matériaux de peau afin de réaliser des pièces en matière plastique revêtues de films décoratifs, insonorisants ou étanches.

Ainsi, dès 1981, GB-2 070 504-A divulgue un procédé pour réaliser un flanc de formage destiné à constituer, après formage sous vide, un conteneur en matière plastique dont la paroi est multicouche. Le flanc de formage résulte d'un surmoulage par compression, c'est-à-dire par rapprochement des deux moitiés du moule, d'une masse de polypropylène contre un film préalablement placé dans un moule, pour obtenir un flanc multicouche à former ensuite sous vide.

La présente invention est relative à une utilisation particulière du procédé d'extrusion-compression ou d'injection compression pour résoudre d'une manière simple et efficace les problèmes posés par la réalisation de pièces renforcées en matière plastique en éliminant les inconvénients résultant des procédés antérieurs.

FR-2 628 448 décrit une utilisation du procédé de compression pour obtenir une pièce renforcée à partir d'une armature textile de renfort placée dans un moule ouvert dans lequel on a préalablement déposé des masses d'un mélange d'une résine et de fibres (mélange désigné compound).

EP-0 423 676-A2 divulgue aussi un procédé de compression d'une masse de résine déposée dans un moule ouvert et d'une feuille de renforcement pour fabriquer une pièce renforcée.

La résine utilisée est un copolymère d'éthylène-propylène, dont le "m.f.i", c'est-à-dire le "melt flow index" ou indice de fluidité, est de 65 grammes par 10 minutes.

La présente invention a pour objet un nouveau procédé pour réaliser des pièces renforcées en matière thermoplastique en utilisant la technique d'extrusion-compression ou d'injection-compression, selon lequel on dépose au moins une feuille de renforcement dans un moule à plan de joint positif ouvert, ainsi qu'un moins une masse de la matière thermoplastique, on referme le moule , et on l'ouvre après refroidissement de la matière thermoplastique pour en extraire la pièce, caractérisé par le fait que l'on dépose la feuille de renforcement à l'intérieur du moule en la laissant libre, les dimensions de la feuille étant telles que, lors de la fermeture du moule, la périphérie de la feuille n'est pas pincée dans le plan de joint du moule, la feuille de renforcement étant constituée par des fibres ou fils de renfort continus, la matière introduite dans le moule se trouvant à l'état pâteux, les positions relatives des feuilles de renforcement et de la matière thermoplastique étant telles que lors de la fermeture du moule, l'écoulement de la matière plastique s'effectue de manière centrifuge et ne provoque pas de déplacements ou de déformations indésirables de la feuille de renforceamnt.

Selon l'invention, le fait que la feuille de renforcement soit laissée libre dans le moule signifie que la périphérie de cette feuille n'est pas pincée dans le plan de joint du moule, de sorte qu'elle peut se déformer librement.

Bien entendu, si la feuille venait à être pincée localement sans que ce pincement ne gêne la déformation de la feuille, la feuille serait considérée comme libre dans le moule, au sens de l'invention.

Selon un premier mode de mise en oeuvre de l'invention, une feuille de renforcement est placée dans le moule en dessous et/ou en dessus de la masse de matière plastique, de telle sorte que chacune de ces feuilles se trouvent disposée sur l'une des faces de la pièce fabriquée.

Selon un second mode de mise en oeuvre de l'invention, une feuille de renforcement est disposée entre deux masses de matière thermoplastique, ce qui permet de l'enrober complètement dans la matière plastique avec laquelle on réalise la pièce.

Ce second mode de mise en oeuvre est avantageux car il permet de réaliser une pièce renforcée intérieurement qui présente le même aspect qu'une pièce non renforcée.

En effet, on constate qu'en étant libre de se déformer, la feuille de renforcement demeure dans l'épaisseur de la pièce et ne vient pas à effleurement des faces de ladite pièce.

En outre, le fait de laisser libre la feuille de renforcement dans le moule, sans la pincer à sa périphérie, permet d'enrober y compris les bords de la feuille de renforcement, et donc de la dissimuler complètement dans la pièce, ce qui évite par ailleurs une opération de reprise qui consisterait à découper la feuille de renforcement à la périphérie de la pièce moulée ainsi obtenue.

Dans une variante, une feuille de renforcement peut être placée également sur au moins une des deux faces du moule.

Il résulte des essais qui ont été effectues par la société demanderesse, que, contrairement à ce que l'on pouvait craindre, il ne se produit lors de la mise en oeuvre du procédé selon l'invention aucune déformation gênante de la ou des feuilles de renforcement laissées pourtant libres dans le moule, déformations telles que par exemple des plis ou des déplacements inopportuns, comme cela se produit avec les procédés d'injection conventionnels.

En effet, selon l'invention, le positionnement de la masse de matière thermoplastique peut être facilement déterminé de manière à ce que, lors de la fermeture du moule, la matière plastique subisse un déplacement de type centrifuge qui est sensiblement le même dans toutes les directions et qui a tendance à repousser vers l'extérieur la périphérie des feuilles de renforcement, sans déplacer globalement de ces dernières, en évitant ainsi des déformations indésirables, du fait que les feuilles sont ainsi tendues par la matière thermoplastique en déplacement centrifuge, mais libres de s'adapter à la forme de la pièce.

De surcroît, lors de la mise en oeuvre du procédé selon l'invention les flux de matière plastique génèrent des pressions plus faibles qu'avec les procédés classiques d'injection de sorte que ces flux ont beaucoup moins tendance à déformer les feuilles de renforcement de manière intempestive.

Les éléments actifs des feuilles de renforcement peuvent être constitués par exemple par des fibres de verre, d'aramide, de carbone ou de produits naturels tels que le lin ou encore par des fils ou fibres métalliques.

Les feuilles de renforcement peuvent être réalisées sous la forme d'un tissu obtenu à partir des fibres continues qui constituent les éléments actifs de la feuille de renforcement.

Selon un premier mode de réalisation préféré des feuilles de renforcement, les fibres ou les fils qui constituent les éléments actifs de ces feuilles sont associés avec des fibres ou des fils de matières thermoplastiques tels que le polypropylène qui, lorsqu'ils sont portés à une température convenable, se soudent intimement à la matière thermoplastique avec laquelle la pièce est fabriquée.

On obtient de cette manière, une parfaite solidarisation de la feuille de renforcement et de la matière thermoplastique avec laquelle la pièce est réalisée.

Conformément à l'invention, il est avantageux de préchauffer les feuilles de renforcement, par exemple à une température d'environ 120 à 300°C, par exemple de 150°C avant de la placer dans le moule ouvert, ce qui facilite la fusion des fibres thermoplastiques et leur adhérence à la masse de matière thermoplastique qui constitue la pièce.

Dans une première variante de ce mode de mise en oeuvre de l'invention, on utilise des tricots ou des tissus réalisés à l'aide de deux variétés de fils ou de fibres, à savoir d'une part, des fibres ou des fils de renforcement tels que des fils ou des fibres de verre, d'aramide, de carbone ou même métalliques, et d'autre part, des fibres ou des fils en matière thermoplastique, qui par leur fusion, entraînent la solidarisation de la feuille de renforcement avec la matière plastique qui constitue la pièce.

Dans un second mode de mise en oeuvre du procédé selon l'invention, on utilise une feuille de renforcement à structure ouverte qui comporte uniquement ou essentiellement des fibres ou des fils de renforcement tels que ceux qui ont été indiqués au sujet du premier mode de mise en oeuvre.

La solidarisation entre la feuille de renforcement et la matière thermoplastique qui constitue la pièce est obtenue par le fait que la matière thermoplastique pénètre dans la structure ouverte de la feuille de renforcement qui est ainsi totalement imprégnée de matière thermoplastique et se trouve en conséquence absorbée par cette dernière.

Dans l'un ou l'autre de ces modes de mise en oeuvre, il est souhaitable de préchauffer la feuille de renforcement pour assurer une meilleure adhésion de cette dernière à la matière plastique. Ce préchauffage peut être effectué à environ 80 à 250°C par exemple à 100°C lorsque la feuille de renforcement ne comporte pas de fibres ou de fils thermoplastiques.

Conformément à l'invention, il est également possible de réaliser des pièces en matière plastique renforcée qui présentent sur au moins l'une de leurs faces des aspects particuliers.

Tout d'abord, il est clair que si l'on utilise une feuille de renforcement qui ne peut être traversée par la matière thermoplastique lors de la fermeture du moule, la face de la pièce qui est opposée à la feuille de renforcement présentera un aspect qui dépend uniquement de la surface du moule sur laquelle la masse de matière thermoplastique est appliquée lors de la mise en oeuvre du procédé et de la nature de la matière thermoplastique.

Par ailleurs, il est possible conformément à l'invention, de placer également dans le moule des feuilles de revêtement destinées à modifier l'aspect de la pièce obtenue et/ou à réaliser une isolation phonique et/ou thermique.

Ces feuilles de revêtements peuvent être constituées par exemple par un film, un tissu, un tricot ou une mousse, éventuellement décoré.

Bien entendu, ces revêtements doivent avoir une structure qui leur permet d'adhérer à la pièce lors du processus de fabrication de cette dernière.

La matière thermoplastique peut être de nature variée, par exemple du polypropylène ou du styrène maléique anhydride.

La présente invention a également pour objet les pièces en matière plastique renforcées qui sont obtenues par le procédé décrit ci-dessus.

Dans le but de mieux faire comprendre l'invention, on va en décrire maintenant à titre d'illustration et sans aucun caractère limitatif, quelques exemples de mise en oeuvre, en se référant au dessin annexé dans lequel :
- la figure 1 est une vue en section transversale d'une poutre réalisée par mise en oeuvre du procédé selon l'invention,
- la figure 2 est une vue en coupe de la partie inférieure d'un moule utilisé pour réaliser la poutre de la figure 1, et
- la figure 3 est une vue en coupe selon III-III de la figure 2.

### Exemple 1

Pour réaliser une pièce sensiblement plate, constituant la paroi intérieure d'une portière de véhicule, on dépose, à l'aide d'une tête d'injection ou d'extrudeuse, une masse de polypropylène à une température de 235° C dans la partie inférieure du moule qui correspond à la face cachée de la paroi de portière. Le volume de cette masse est de 0,780 litre pour un volume de moule de 0,735 litre.

On place ensuite sur cette masse une feuille de renforcement constituée par un tissu de 100g/m² à structure ouverte réalisé à l'aide de 40% de fibres ou de fils de verre et 60% de polypropylène ce tissu ayant été préalablement porté à la température de 100° C.

Cette feuille a une forme qui correspond sensiblement à celle du panneau qui doit être réalisé, mais avec des dimensions légèrement inférieures, de sorte que la périphérie de la feuille se situe à l'intérieur du moule.

On place ensuite sur la feuille de renforcement un tissu d'aspect en polypropylène, puis on referme le moule que l'on maintient fermé jusqu'au refroidissement de la pièce et on démoule.

Lors de la fermeture du moule, la masse de matière thermoplastique flue de manière centrifuge dans le moule et tend la feuille de renforcement.

Le fait que la feuille de renforcement de plisse pas est facilement détectable, le tissu d'aspect étant directement au contact de ladite feuille.

La pièce obtenue comporte sur sa face extérieure le tissu d'aspect, qui est parfaitement lisse, et présente sur sa face intérieure un poli qui correspond à la finition de la surface du moule. La feuille de renforcement n'est visible ni sur les faces de la pièce, ni sur sa tranche.

### Exemple 2

On réalise selon l'invention un renfort destiné à être placé à l'intérieur de la caisse métallique des véhicules au droit des sièges. Ce renfort permet aux occupants du véhicule d'être déplacés progressivement vers l'intérieur de l'habitacle de manière à limiter les traumatismes et blessures lors d'un choc latéral.

Cette pièce est constituée par une plaque d'environ 140X240mm, d'épaisseur de 3 à 5mm, dont la surface côté habitacle est totalement lisse. Sur son autre face, cette plaque est rigidifiée par une pluralité de nervures croisées parallèles aux bords extérieurs, de 5mm d'épaisseur, s'étendant sur une hauteur de 6 à 8mm.

Pour réaliser cette pièce, on place à l'aide d'une tête d'injection ou d'extrudeuse, une masse de SMA (styrène maléique anhydride) chargé à 30% de fibres de verre, à une température de 250°C dans la partie inférieure du moule qui comporte les creux des nervures croisées.

On place ensuite dans le moule une feuille de renforcement constituée par un tissu de 660g/m² à structure ouverte, composée de 75% de fils de verre et de 25% de fils de SMA qui est préalablement portée à la température de 180°C.

Cette feuille a une forme qui correspond sensiblement à celle de la pièce à réaliser, mais qui est de dimensions légèrement inférieures.

A l'aide d'une tête d'extrudeuse, on dépose ensuite sur la feuille de renforcement, une seconde masse de SMA non chargé de fibres de verre, puis l'on referme le moule que l'on maintient ensuite fermé jusqu'au refroidissement de la pièce.

Le volume de la première masse de SMA est de 0,330 litre et celui de la seconde masse de SMA de 0,335 litre pour un volume total de moule fermé de 0,648 litre.

Lorsque l'on ferme le moule, la masse de SMA s'écoule de manière centrifuge et tend la feuille de renforcement, laquelle demeure ainsi en position et ne plisse pas.

La pièce obtenue présente une face d'aspect et de toucher lisse. La feuille de renforcement et les fibres de verre ne sont pas visibles sur cette face.

### Exemple 3

On réalise selon l'invention une poutre de 130 cm de long et pesant 2,5 kg, destiné à venir renforcer le bouclier d'un pare-chocs de véhicule.

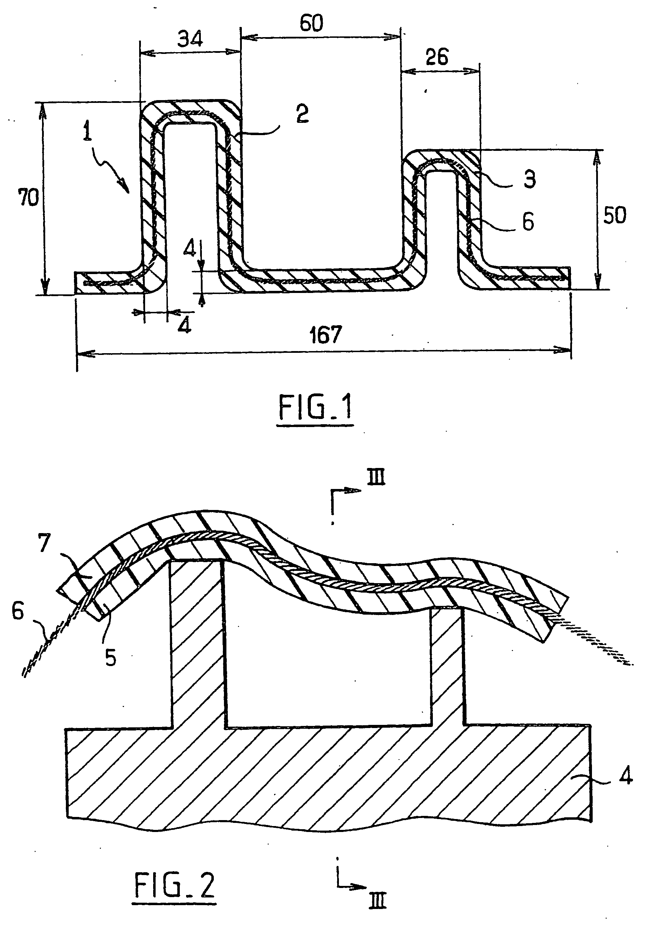

Les dimensions en section de la poutre sont indiquées en mm sur la figure 1.

La section transversale de cette poutre 1 se présente sous la forme d'une succession de deux créneaux 2,3 de tailles différentes, comme représenté sur la figure 1.

Pour réaliser une telle poutre, on utilise du polypropylène chargé à 20 % de fibres de verre et une feuille d'un tissu mixte composée de fibres de verre et de fibres de polypropylène, dans une proportion de 40% de verre et 60% de polypropylène.

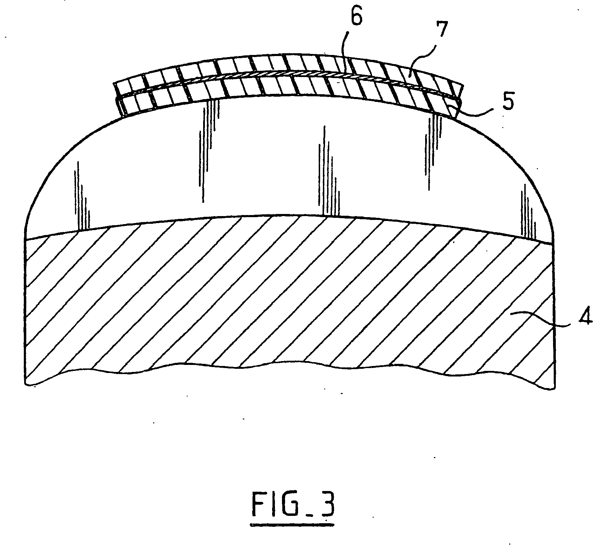

On utilise un moule dont la partie inférieure 4 est représentée en coupe transversale sur la figure 2 et en vue latérale sur la figure 3.

On constate que la poutre est courbe de manière à pouvoir suivre la courbure du pare-chocs dans lequel elle est destinée à être logée.

On peut noter que cette courbure , qui ne pose pas de problème particulier pour la mise en oeuvre de l'invention, rendrait délicate, voire impossible, la réutilisation d'une telle poutre par extrusion, ou encore son renforcement par un profilé métallique, lequel est en effet généralement rectiligne.

Sur la partie inférieure du moule ouvert, on dépose d'abord 1,2 kg de polypropylène, sous la forme d'un extrudat 5 en bande de 600 mm de long et 150x15 mm de section, comme représenté à la figure 2.

On place ensuite le tissu 6 sur cet extrudat, sans le maintenir. Les dimensions de la feuille de tissu sont telles que, lors de la fermeture du moule, ladite feuille se déformant alors selon la section transversale en créneaux de la poutre, la périphérie de la feuille se trouve en retrait par rapport aux bords de la poutre et donc ne dépasse pas des bords du moule.

Par dessus la feuille de tissu, on dépose à nouveau un extrudat 7 de 1,2 kg de polypropylène présentant les mêmes dimensions que précédemment.

On laisse l'empilement en l'état pendant environ 10 secondes pour préchauffer la feuille de tissu et faciliter sa déformation.

On ferme ensuite le moule, ce qui provoque le fluage de la masse de polypropylène de manière centrifuge, c'est-à-dire que la feuille de tissu est entraînée par la matière thermoplastique dans toutes les directions, d'où il résulte un déplacement global pratiquement nul de cette feuille.

La poutre obtenue présente une excellente rigidité et la feuille de renforcement se trouve complètement enrobée dans la masse de polypropylène, sans apparaître en aucun endroit de la surface de la poutre, ni se plisser de manière intempestive.

L'invention a été décrite en se référant à des moules à plan de joints sensiblement horizontal qui permettent une mise en oeuvre aisée, mais il est clair que selon l'invention on peut également utiliser des moules dont le plan de joint n'est pas horizontal à condition de prévoir des moyens connus pour maintenir les feuilles de renfort, la matière plastique injectée étant suffisamment visqueuse pour ne pas se déplacer sensiblement avant la fermeture du moule.

## Revendications

1. Procédé pour réaliser une pièce renforcée en matière thermoplastique en utilisant la technique d'extrusion-compression ou d'injection-compression, selon lequel on dépose au moins une feuille de renforcement dans un moule à plan de joint positif ouvert, ainsi qu'au moins une masse de matière thermoplastique, on referme le moule et on l'ouvre après refroidissement de la matière thermoplastique pour en extraire la pièce, **caractérisé par le fait que** l'on dépose la feuille de renforcement à l'intérieur du moule en la laissant libre, les dimensions de la feuille étant telles que, lors de la fermeture du moule, la périphérie de la feuille n'est pas pincée dans le plan de joint du moule, la feuille de renforcement étant constituée par des fibres ou fils de renfort continus, la matière plastique introduite dans le moule se trouvant à l'état pâteux, les positions relatives de la feuille de renforcement (6) et de la matière thermoplastique (5,7) étant telles que, lors de la fermeture du moule (4), l'écoulement de la matière plastique s'effectue de manière centrifuge et ne provoque pas de déplacement ou de déformation indésirables de la feuille de renforcement (6).

2. Procédé selon la revendication 1, **caractérisé en ce que** la feuille de renforcement est constituée par un tissu de fibres ou de fils de renfort continus

3. Procédé selon la revendication 2, **caractérisé en ce que** la feuille de renforcement est un tissu mixte, composé des fibres ou fils de renfort continus et de fibres ou fils de matière thermoplastique qui, lorsqu'ils sont portés à une température convenable, se soudent intimement à la matière thermoplastique avec laquelle la pièce est fabriquée

4. Procédé selon l'une quelconque des revendications 1 à 3, **caractérisé par le fait que** la matière thermoplastique pâteuse déposée est choisie parmi le polypropylène et le styrène maléique anhydride.

5. Procédé selon l'urne quelconque des revendications 1 à 4, **caractérisé par le fait qu'**une feuille de renforcement est placée dans le moule en-dessus et/ou en-dessous de la masse de matière thermoplastique, de telle sorte que chaque feuille se trouve disposée sur l'une des faces de la pièce fabriquée.

6. Procédé selon l'une quelconque des revendications 1 à 4, **caractérisé par le fait qu'**une feuille de renforcement est disposée entre deux masses de matière thermoplastique, ce qui permet de l'enrober complètement dans la matière plastique avec laquelle on réalise la pièce.

7. Procédé selon l'une quelconque des revendications précédentes, **caractérisé par le fait que** l'on utilise une feuille de renforcement qui contient des éléments actifs constitués par exemple par des fibres de verre, d'aramide, de carbone ou de produits naturels tels que le lin ou encore par des fils ou fibres métalliques.

8. Procédé selon l'une quelconque des revendications 1 à 7, **caractérisé par le fait que** l'on utilise une feuille de renforcement qui a une structure ouverte qui comporte uniquement ou essentiellement des fibres ou des fils de renforcement et qui peut être traversée par la matière thermoplastique.

9. Procédé selon l'une quelconque des revendications précédentes, **caractérisé par le fait qu'**avant de l'introduire dans le moule, on porte la feuille de renforcement à une température d'environ 80° à 300°C par exemple de 150°C, pour des fibres de polypropylène.

10. Procédé selon l'une quelconque des revendications précédentes, **caractérisé par le fait que** l'on place également dans le moule contre au moins une paroi de ce dernier une feuille de revêtement destinée à modifier l'aspect de la pièce obtenue.

## Patentansprüche

1. Verfahren zur Herstellung eines verstärkten Stücks aus thermoplastischem Material unter Anwendung der Extrusions-Kompressions-Technik oder der Einspritz-Kompressions-Technik, wobei mindestens ein Verstärkungsblatt sowie mindestens eine Masse aus thermoplastischem Material in eine Form mit offener positiver Formteilfläche eingefügt, die Form wieder geschlossen und nach dem Abkühlen des thermoplastischen Materials geöffnet wird, um daraus das Stück zu entnehmen, **dadurch gekennzeichnet, dass** das Verstärkungsblatt im Inneren der Form eingefügt und dabei frei gelassen wird, wobei die Abmessungen des Blattes dergestalt sind, dass zum Zeitpunkt des Schließens der Form der Umfang des Blattes nicht in der Formteilfläche der Form eingeklemmt ist, wobei das Verstärkungsblatt aus durchgehenden Verstärkungsfasern oder -fäden besteht, das thermoplastische Material, das in die Form eingeführt wird, sich in pastenartigem Zustand befindet, die relativen Positionen des Verstärkungsblattes (6) und des thermoplastischen Materials (5, 7) dergestalt sind, dass zum Zeitpunkt des Schließens der Form (4) das Abfließen des thermoplastischen Materials zentrifugal erfolgt und kein unerwünschtes Verschieben oder Verformen des Verstärkungsblattes (6) verursacht.

2. Verfahren nach Anspruch 1, **dadurch gekennzeichnet, dass** das Verstärkungsblatt aus einem Gewebe aus durchgehenden Verstärkungsfasern oder -fäden besteht.

3. Verfahren nach Anspruch 2, **dadurch gekennzeichnet, dass** das Verstärkungsblatt aus einem Mischgewebe besteht, das aus durchgehenden Verstärkungsfasern oder - fäden und Fäden aus thermoplastischem Material besteht, welche sich - wenn sie auf eine geeignete Temperatur gebracht werden - eng mit dem thermoplastischen Material verschweißen, mit welchem das Stück hergestellt wird.

4. Verfahren nach einem der Ansprüche 1 bis 3, **dadurch gekennzeichnet, dass** das eingefügte pastenartige thermoplastische Material aus Polypropylen und Styrolmaleinsäureanhydrid ausgewählt ist.

5. Verfahren nach einem der Ansprüche 1 bis 4, **dadurch gekennzeichnet, dass** ein Verstärkungsblatt dergestalt in die Form oberhalb und/oder unterhalb der Masse aus thermoplastischem Material angeordnet wird, dass sich jedes Blatt auf einer der Flächen des hergestellten Stücks angeordnet befindet.

6. Verfahren nach einem der Ansprüche 1 bis 4, **dadurch gekennzeichnet, dass** ein Verstärkungsblatt zwischen zwei Massen aus thermoplastischem Material angeordnet ist, wodurch es möglich wird, das Verstärkungsblatt vollständig in das thermoplastische Material einzuhüllen, mit dem das Stück hergestellt wird.

7. Verfahren nach einem der vorhergehenden Ansprüche, **dadurch gekennzeichnet, dass** ein Verstärkungsblatt verwendet wird, das aktive Elemente enthält, welche zum Beispiel aus Glasfasern, Aramidfasern, Kohlenstofffasern oder aus natürlichen Produkten wie Leinen oder aus Metallfäden oder -fasern bestehen.

8. Verfahren nach einem der Ansprüche 1 bis 7, **dadurch gekennzeichnet, dass** ein Verstärkungsblatt verwendet wird, welches eine offene Struktur aufweist, die ausschließlich oder im Wesentlichen Verstärkungsfasern oder -fäden umfasst, und welches vom thermoplastischen Material durchquert werden kann.

9. Verfahren nach einem der vorhergehenden Ansprüche, **dadurch gekennzeichnet, dass** das Verstärkungsblatt vor dem Einführen in die Form auf eine Temperatur von ungefähr 80° bis 300 °C, zum Beispiel auf 150 °C für Polypropylenfasern, gebracht wird.

10. Verfahren nach einem der vorhergehenden Ansprüche, **dadurch gekennzeichnet, dass** ferner in die Form gegen mindestens eine Wand der Form ein Abdeckblatt eingefügt wird, das dazu bestimmt ist, das Erscheinungsbild des erhaltenen Stücks zu ändern.

## Claims

1. A process for producing a thermoplastic reinforced part by extrusion-compression or injection-compression molding, comprising depositing at least one reinforcing sheet and at least one mass of thermoplastic material in a mold having an open positive parting plane, closing said mold, and opening said mold after cooling of thermoplastic material to extract said thermoplastic reinforced part,
**characterized in that** it comprises depositing the reinforcing sheet free inside the mold, the sheet having dimensions allowing the border of the sheet not to be squeezed in the parting plane of the mold during closing of the mold, the reinforcing sheet being constituted by continuous reinforcing fibers or filaments, said thermoplastic material introduced in the mold being in a pasty state,
and positioning the reinforcing sheet relatively to said thermoplastic material so that, during closing of the mold, said thermoplastic material flows centrifugally and does not cause undesirable movement or undesirable deformation of said reinforcing sheet.

2. A process according to claim 1, wherein said reinforcing sheet is constituted by a fabric made with continuous reinforcing fibers or filaments.

3. A process according to claim 2, wherein said reinforcing sheet is a hybrid fabric, comprising continuous reinforcing fibers or filaments and thermoplastic fibers or filaments, which intimately weld with said thermoplastic material used to make the part when they are in a suitable temperature.

4. A process according to any one of claims 1 to 3, wherein said pasty thermoplastic material which is deposited is chosen among polypropylene and styrene maleic anhydride.

5. A process according to any one of claims 1 to 4, wherein one of said reinforcing sheet is positioned in said mold above and/or below mass of said thermoplastic material to provide each reinforcing sheet on a face of said thermoplastic reinforced part.

6. A process according to any one of claims 1 to 4, wherein one of said reinforcing sheet is arranged between two masses of said thermoplastic material to provide complete encapsulation of said reinforcing sheet within said thermoplastic material used to make the part.

7. A process according to any one of previous claims, wherein said reinforcing sheet comprises active elements comprising for example glass, aramid, or carbon fibers or fibers of natural substances such as flax, or else metal fibers or filaments.

8. A process according to any one of claims 1 to 7, wherein said reinforcing sheet prossesses an open structure comprising only or essentially reinforcing fibers or filaments and which allows said thermoplastic material to flow through said reinforcing sheet.

9. A process according to any one of previous claims, wherein said reinforcing sheet is heated to a temperature of from about 80°C to about 300°C, for example 150°C for polypropylene fibers, before introduction into said mold.

10. A process according to any one of previous claims, wherein a covering sheet is also placed in said mold against at least one wall of said mold to modify the aspect of said thermoplastic reinforced part.
